# EUROPÄISCHE PATENTSCHRIFT

(11) **EP 0 561 852 B1**
(45) Veröffentlichungstag und Bekanntmachung des Hinweises auf die Patenterteilung: **10.08.1994**
(21) Anmeldenummer: 91920905.6
(22) Anmeldetag: 29.11.1991
(51) Int. Cl.: B62D 25/08, B62D 29/00

(54) **TRÄGERVERBINDUNG AN EINER FAHRZEUGKAROSSERIE**
BEARER JOINT FOR VEHICLE BODYWORK
ASSEMBLAGE DE SUPPORTS D'UNE CARROSSERIE DE VEHICULE

(30) Priorität: 20.12.1990 DE 4040981
(43) Veröffentlichungstag der Anmeldung: 29.09.1993
(73) Patentinhaber: AUDI AG, 85002 Ingolstadt (DE)
(72) Erfinder: KLAGES, Ulrich, D-8070 Ingolstadt (DE); ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9102265
(87) Internationale Veröffentlichungsnummer: WO9211164

(56) Entgegenhaltungen:
- DE-A- 2 358 356
- DE-A- 2 358 356
- PATENT ABSTRACTS OF JAPAN vol. 14, No. 193 (M-104) 25 October 1990 & JP,A,2 200 580 (MAZDA) 8 August 1990
- PATENT ABSTRACTS OF JAPAN vol. 10, No. 193 (M-496)(2249) 8 July 1986 & JP,A,61 037 583 (NISSAN) 22 February 1986
- PATENT ABSTRACTS OF JAPAN vol. 13, No. 512 (M-893) 16 November 1989 & JP,A,1 204 868 (MAZDA) 17 August 1989

## Beschreibung

Die Erfindung betrifft eine Trägerverbindung an einer Fahrzeugkarosserie nach dem Oberbegriff des Anspruchs 1.

Eine bekannte Tragstruktur einer Fahrzeugkarosserie (EP-PS 0 146 716) nach dem Oberbegriff des Anspruchs 1 ist unter Verwendung von Hohlprofilträgern hergestellt, die durch Knotenelemente miteinander verbunden sind. Als Hohlprofilträger sind Aluminium-Strangprofile und als Knotenelemente Aluminium-Gußknotenteile eingesetzt.

Die Knotenelemente sind teilweise aus zwei Schalen gebildet, die die Enden der Trägerteile übergreifen und über Schweiß- oder Klebeverbindungen befestigt sind. In einer anderen Befestigungsart werden die Enden der Träger mit ihren Stirnseiten an die Knotenelemente herangeführt und an entsprechenden Ausnehmungen eingesetzt oder an Anlageflächen mit Ausklinkungen angefügt und dort verschweißt oder verklebt.

An den Verbindungsstellen der Träger zu den Knotenelementen treten bei Fahrzeugkarosserien hohe Belastungen auf, die hohe Anforderungen an die Festigkeit und Steifigkeit der Verbindungen stellen. Eine besonders kritische Stelle bei einer Fahrzeugkarosserie ist der Knoten am mittleren Teil des Pfosten A, wo ein nach unten weisender, unterer Teil des Pfosten A, ein etwa waagrecht nach vorne weisender Kotflügelbankträger und ein etwa waagrecht verlaufender Querträger als unterer Holm der Frontscheibe sowie ein schräg nach oben weisender, oberer Teil des Pfosten A zusammentreffen und alle diese Träger über ein Knotenelement miteinander verbunden werden müssen. Dort kann insbesondere der obere Teil des Pfosten A im Querschnitt nicht beliebig stark dimensioniert werden, da sonst die Sicht für den Fahrer zu stark beeinträchtigt wäre. Die Wurzel des oberen Teils des Pfosten A am Knotenelement stellt damit im Dacheindrück- oder Überschlagversuch die kritische Schwachstelle eines Fahrzeugdaches und damit der Karosserie insgesamt dar.

Es ist eine Trägerverbindung bekannt (US-A-2 520 074) zwischen einem oberen Teil eines Pfosten A (vorderer Dachpfosten) und dem Vorderwagen einer Fahrzeugkarosserie. Der vordere Dachholm ist dabei in seiner schräg nach vorne verlaufenden Richtung über den Bereich des unteren Fensterholms hinaus in den Vorderwagen weitergeführt. Dort ist er plattenförmig verbreitert und mit seitlichen Randflanschen durch Punktschweißung mit dem Seitenblech einer Fußraumwand der Fahrgastzelle durch Punktschweißung verbunden. Die gesamte Anordnung besteht bis auf den vorderen Dachpfosten aus relativ großflächigen Blechteilen einer selbsttragenden Karosserie, die unter- und übereinanderliegend miteinander verbunden sind. Eine rahmenartige Tragstruktur, bestehend aus einzelnen Trägern, die über konkrete und separate Knotenelemente miteinander verbunden sind, liegt hier nicht vor. Damit besteht auch hier nicht das Problem einer stabilen Trägerverbindung mit einem räumlich abgegrenzten Knotenelement, insbesondere einer stabilen Verbindung zwischen einem Aluminium-Strangpreßprofil als Träger und einem Aluminium-Gußteil als Knotenelement.

Weiter ist eine Trägerverbindung im mittleren Bereich des Pfosten A bekannt (PATENT ABSTRACTS OF JAPAN, vol. 14, no. 491 (M-104) 25. Oktober 1990 & JP-A-2 200 580 (MAZDA) 8. August 1990), bei der das obere Ende eines unteren Teils eines Pfosten A mit einem etwa waagrecht nach vorne weisenden Kotflügelbankträger stumpf verbunden ist. Ein vorderer Dachholm ist rohrförmig ausgebildet und durch entsprechend angepaßte Öffnungen durch die Wände des Kotflügelbankträgers und des unteren Teils des Pfosten A eingesteckt und an den Anlageflächen verschweißt. Hier sind somit drei Hohlprofilträger unmittelbar ohne Knotenelement zusammengeführt und teilweise ineinandergesteckt, wobei untereinander auftretende Anlageflächen miteinander verschweißt sind. Es liegt somit eine rahmenartige Tragstruktur für eine Fahrzeugkarosserie vor, die jedoch im Gegensatz zum Anmeldungsgegenstand keine konkreten, räumlich definierten Knotenelemente, insbesondere in der Art von Aluminium-Gußteilen, an die Aluminium-Strangpreßprofile angeschlossen werden sollen, aufweisen. Damit tritt auch hier das Problem einer stabilen Verbindung an einem Knotenelement mit einem konkaven Bereich nicht auf.

Aufgabe der Erfindung ist es, eine Trägerverbindung zwischen einem Träger und einem Knotenelement an einer Fahrzeugkarosserie, insbesondere eine Verbindung zwischen einem oberen Teil eines Pfosten A und einem Knotenelement am Pfosten A Mitte zu schaffen, die hohen Belastungen standhält.

Diese Aufgabe wird mit den Merkmalen des Anspruchs 1 gelöst.

Gemäß Anspruch 1 enthält wenigstens ein Knotenelement der Tragstruktur einen konkaven Bereich (als bruchgefährdeten Bereich), der von einem Träger überspannt wird. Der Träger ist zu beiden Seiten des konkaven Bereich mit dem Knotenelement verbunden, so daß der am Knotenelement zwischen den Verbindungsstellen liegende Trägerteil als Zugband wirkt und für die Verbindung eine Breite Basis zur Verfügung steht.

Es wird somit ein steifer Verband aus dem Knotenelement und dem Trägerteil geschaffen, wobei das Trägerteil über den bruchgefährdeten Bereich des Knotenelements hinweggeführt ist und durch die beidseitige, feste Verbindung und die Zugbandwirkung einen wesentlichen Gewinn an Festigkeit und Belastbarkeit schafft. Der Trägerteil über dem konkaven Bereich des Knotenelements wirkt je nach der Belastungsrichtung wie eine zusätzliche Stützstrebe oder wie ein Zugband.

Üblicherweise endet ein Träger an einem Knotenelement, bzw. steht einseitig von diesem ab. Für die erfindungsgemäße Verbindung wird mit Anspruch 2 daher vorgeschlagen, eine Verbindungsstelle an einem Trägerende vorzusehen, wobei im weiteren Verlauf der Träger den konkaven Bereich des Knotenelements als Zugband überdeckt und im Abstand zum Trägerende nochmals mit dem Knotenelement fest verbunden ist.

In einer besonders bevorzugten Ausführung nach Anspruch 3 wird die erfindungsgemäße Trägerverbindung bei Aluminiumkarosserien ausgeführt, wobei die Träger als Hohlprofile in der Art von Aluminium-Strangprofilen und die Knotenelemente als Aluminium-Gußteile ausgeführt sind. Damit ergibt sich ein sehr steifer Verband aus dickwandigen Aluminium-Gußteilen und einem Aluminium-Strangprofil mit hoher Dehnung und Energieaufnahme, wobei das Aluminium-Strangprofil zur Vergrößerung der Belastbarkeit auch hier wie ein Zugband oder eine Stützstrebe wirkt und zweckmäßig einen bruchgefährdeten, konkaven Bereich überbrückt.

Die Verbindungen zu beiden Seiten des konkaven Bereichs können nach Anspruch 4 in an sich bekannter Weise mit hoher Festigkeit durch Schweißverbindungen hergestellt sein. Es sind jedoch auch Schraubverbindungen und bei entsprechend großen, flächigen Anlagen auch Klebeverbindungen möglich.

Besonders vorteilhaft wird die erfindungsgemäße Trägerverbindung nach Anspruch 5 für die Anbindung des oberen Teils des Pfosten A an einem Knotenelement am Pfosten A Mitte eingesetzt. Dabei liegt das Knotenelement in der Mitte des Pfosten A, wobei an das Knotenelement ein nach unten weisender, unterer Teil des Pfosten A als Strangprofil, ein etwa waagrecht nach vorne weisender Kotflügelbankträger und ein etwa waagrecht verlaufender Querträger als unterer Holm der Frontscheibe mit stirnseitigen Enden herangeführt und in an sich bekannter Weise verbunden sind. Ein schräg nach oben weisender, oberer Teil des Pfosten A ist ebenfalls als Strangprofil ausgebildet und entspricht dem Träger, der mit der erfindungsgemäßen Trägerverbindung mit dem Knotenelement verbunden ist. Dabei überdeckt dieser Träger einen oberen, konkaven Bereich des Knotenelements und ist sowohl mit seinem Trägerende als auch mit einer dazu in einem Abstand gelegenen Stelle mit dem Knotenelement verbunden. Der zwischen diesen beiden Verbindungsstellen liegende Trägerbereich wirkt somit auch hier als Zugband oder Stützstrebe und überbrückt einen bruchgefährdeten Bereich des Knotenelements. Es wird somit eine besonders steife Anbindung des oberen Teils des Pfosten A am Knotenelement erhalten, mit einem steifen Verband aus dem Trägerteil des Pfosten A und dem Knotenelement. Damit wird eine kritische Schwachstelle eines Fahrzeugdachs wesentlich versteift und damit die Fahrgastzelle insgesamt sicherer gestaltet.

Zweckmäßig wird nach Anspruch 6 das durch den Überbrückungsträger durchbrochene Knotenelement mit einem Schließblech von oben her verschlossen. Dieses Schließblech kann im Knotenbereich vorteilhaft als Aufnahme für eine Frontscheibe verwendet werden.

Anhand einer Zeichnung wird ein Ausführungsbeispiel der Erfindung mit weiteren Merkmalen, Einzelheiten und Vorteilen näher erläutert.

Es zeigen
- Fig. 1: eine schematische Seitenansicht eines Knotenelements an einem Pfosten A Mitte einer Fahrzeugkarosserie mit angeschlossenen Trägern und
- Fig. 2: eine perspektivische Ansicht von schräg oben auf das in Fig. 1 schematisch dargestellte Knotenelement in einer konkreten Ausführungsform.

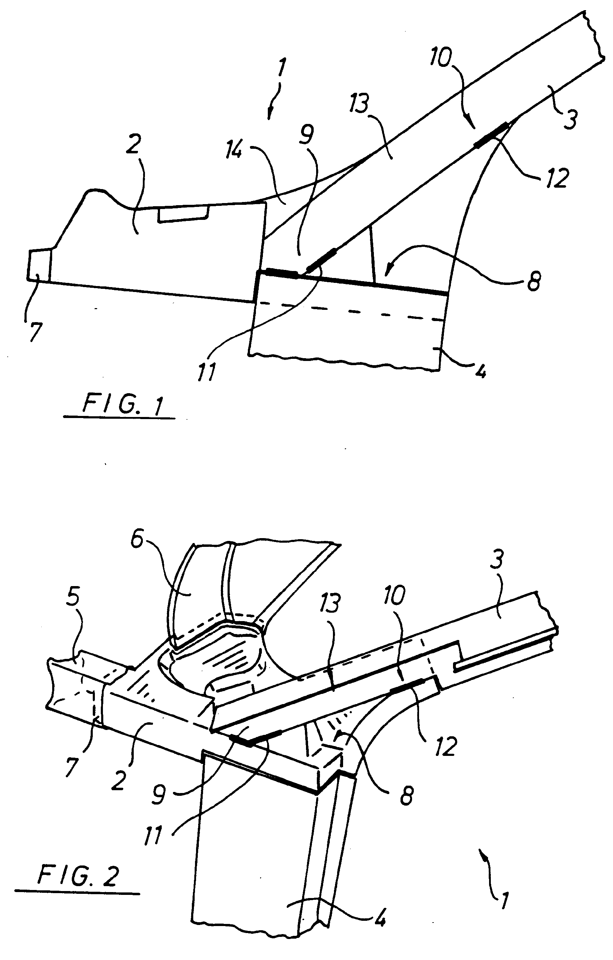

In Fig. 1 ist eine Trägerverbindung 1 schematisch an einem Knoten am Pfosten A Mitte einer Fahrzeugkarosserie dargestellt, mit einem Knotenelement 2 und einem Träger 3. Der Träger 3 entspricht einem schräg nach oben verlaufenden, oberen Teil eines Pfosten A, der die Begrenzung sowohl für die Frontscheibe als auch Seitenscheibe bildet. Nach unten schließt sich ein Träger 4 an, der den unteren, etwa senkrecht stehenden Teil des Pfosten A bildet, an dem eine Fahrzeugtür (nicht dargestellt) schwenkbar angebracht ist.

Aus der perspektivischen Darstellung einer konkreten Anordnung nach Fig. 2 ist zu ersehen, daß sich an das Knotenelement 2 nach vorne zur Fahrzeugfrontseite noch ein Träger 5 als Kotflügelbankträger und eine Querträgeranordnung 6 als unterer Holm einer Frontscheibe anschließen.

Der Träger 5 bzw. Kotflügelbankträger ist auf einen Fortsatz 7 des Knotenelements 2 aufgesteckt und dort über eine Schweißung verbunden. Der Träger 4 bzw. untere Teil des Pfosten A und die Querträgeranordnung 6 enthalten endseitige Ausklinkungen, die an entsprechenden Anlageflächen des Knotenelements 2 aufliegen, wobei dort ebenfalls eine feste Verbindung über eine Schweißung oder Verklebung hergestellt ist.

Um die Sichtverhältnisse für einen Fahrer nicht zu stark einzuengen, ist der Träger 3 bzw. der obere Teil des Pfosten A im Querschnitt relativ schmal gestaltet. In seinem unteren Endbereich überspannt er einen konkaven, bruchgefährdeten Bereich 8 am Knotenelement 2. Er liegt dabei mit seinem unteren Trägerende 9 und einer dazu nach oben in einem Abstand liegenden Stelle 10 am Knotenelement 2 an und ist dort über Schweißnähte 11, 12 mit den Anlageflächen verbunden.

Der zwischen den Schweißnähten 11, 12 liegende freie Bereich 13, der den bruchgefährdeten Bereich 8 überspannt, wirkt je nach Belastungsrichtung als Zugband oder als Stützstrebe.

Damit wird eine besonders steife Anbindung des Trägers 3 am Knotenelement 2 erreicht und die Bruchgefahr an dieser sonst sehr kritischen Schwachstelle eines Fahrzeugdachs erheblich reduziert.

Für die endgültige Montage ist es erforderlich, das Knotenelement 2 und den unteren Bereich des Trägers 3 durch ein Schließblech 14 mit durchgehender, glatter Außenkontur abzudecken. Ein solches Schließblech 14 ist schematisch in Fig. 1 eingezeichnet. Das Schließblech 14 bildet dann zugleich die Aufnahme für eine Frontscheibe im Knotenbereich.

## Patentansprüche

1. Trägerverbindung an einer Fahrzeugkarosserie,
deren Tragstruktur aus Trägern besteht, die über Knotenelemente verbunden sind,
dadurch gekennzeichnet,
daß wenigstens ein Knotenelement (2) einen konkaven Bereich (bruchgefährdeter Bereich 8) enthält, der von einem Träger (3) überspannt wird und daß der Träger (3) zu beiden Seiten des konkaven Bereichs (8) mit dem Knotenelement (2) verbunden ist (unteres Trägerende 9, Stelle 10), so daß der am Knotenelement (2) zwischen den Verbindungsstellen liegende Trägerteil (13) als Zugband wirkt und für die Verbindung eine breite Basis zur Verfügung steht.

2. Trägerverbindung nach Anspruch 1, dadurch gekennzeichnet, daß der Träger (3) an einer der beiden Verbindungsstellen mit einem Trägerende (9) verbunden ist und einseitig vom Knotenelement (2) absteht.

3. Trägerverbindung nach Anspruch 1 oder 2, dadurch gekennzeichnet, daß der Träger (3) als Hohlprofil in der Art eines Aluminium-Strangprofils und das Knotenelement (2) als Aluminium-Gußteil ausgeführt sind.

4. Trägerverbindung nach einem der Ansprüche 1 bis 3, dadurch gekennzeichnet, daß die im Abstand liegenden Verbindungen durch Schweißverbindungen (Schweißnähte 11, 12) und/oder Schraubverbindungen und/oder Klebeverbindungen hergestellt sind.

5. Trägerverbindung nach einem der Ansprüche 1 bis 4, dadurch gekennzeichnet, daß das Knotenelement (2) in der Mitte des Pfosten A liegt,
daß an das Knotenelement (2) ein nach unten weisender, unterer Teil des Pfosten A (Träger 4), ein etwa waagrecht nach vorne weisender Kotflügelbankträger (5) und ein etwa waagrecht verlaufender Querträger (6) als unterer Holm der Frontscheibe mit ihren stirnseitigen Enden herangeführt und verbunden sind und
daß ein schräg nach oben weisender, oberer Teil des Pfosten A der Träger (3) ist, der das Knotenelement (2) in einem Bereich (8) überdeckt und mit einem Trägerende (9) und zusätzlich in einem Abstand (Stelle 10) mit dem Knotenelement (2) verbunden ist, so daß der Abstandsbereich (13) als Zugband bzw. als Stützstrebe wirkt.

6. Trägerverbindung nach Anspruch 5, dadurch gekennzeichnet, daß das Knotenelement (2) durch ein Schließblech (14) von oben her verschlossen ist und dieses Schließblech (14) eine Aufnahme für eine Frontscheibe im Knotenbereich bildet.

## Claims

1. Beam connection on a vehicle body shell,
the load-bearing structure of which consists of beams joined via gusset elements,
characterised in that
at least one gusset element (2) contains a concave area (area 8 vulnerable to break), which is spanned by a beam (3), and that to both sides of the concave area (8) the beam (3) is joined to the gusset element (2) (lower beam extremity 9 and location 10), with the result that the part of the beam (13) situated at the gusset element (2) between the connection points acts as a beam tie and a broad base is available for the connection.

2. Beam connection according to claim 1, characterised in that the beam (3) is joined at one of the two connection points to a beam extremity (9) and protrudes from the gusset element (2) on one side.

3. Beam connection according to claim 1 or 2, characterised in that the beam (3) is a hollow profile of the extruded aluminium profile type and the gusset element (2) is an aluminium casting.

4. Beam connection according to any of claims 1 to 3, characterised in that the spaced connections have been produced by welded joints (welds 11 and 12) and/or bolted joints and/or glued joints.

5. Beam connection according to any of claims 1 to 4, characterised in that the gusset element (2) is situated in the middle of the A-post,
that a downward-pointing lower part of the A-post (member 4), a substantially horizontally forward-pointing wing bar member (5), and a substantially horizontal cross-member (6) as the lower windscreen member, are brought up to the gusset element (2) by their front ends and joined, and
that an obliquely upward-pointing, upper part of the A-post is the beam (3), which overlaps the gusset element (2) in an area (8) and is joined by a beam extremity (9) and additionally with spacing (location 10) to the gusset element (2), with the result that the spacing area (13) acts as a beam tie or supporting stay.

6. Beam connection according to claim 5, characterised in that the gusset element (2) is sealed from the top by a closure plate (14) and said closure plate (14) forms a locator for a windscreen in the gusset area.

## Revendications

1. Assemblage de poutrelles dans une carrosserie de véhicule automobile dont la structure porteuse est constituée par des poutrelles qui sont assemblées par des éléments de jonction,
caractérisé
en ce qu'au moins un élément de jonction (2) comporte une partie concave (partie en danger de rupture 8) sur laquelle une poutrelle (3) passe en pont, et en ce que la poutrelle (3) est fixée à l'élément de jonction (2) des deux côtés de la partie concave (8) (extrémité inférieure 9 de la poutrelle, point 10), de sorte que la partie (13) de la poutrelle qui s'étend sur l'élément de jonction (2) entre les points agit comme un tirant et offre une large base pour la fixation.

2. Assemblage de poutrelles selon la revendication 1, caractérisé en ce qu'au niveau de l'un des deux points de fixation, la poutrelle (3) est fixée par son extrémité (9) et fait saillie d'un côté sur l'élément de jonction (2).

3. Assemblage de poutrelles selon la revendication 1 ou 2, caractérisé en ce que la poutrelle (3) est réalisée sous forme de profilé creux du genre profilé extrudé en aluminium et l'élément de jonction (2) est réalisé sous forme de pièce en fonte d'aluminium.

4. Assemblage de poutrelles selon l'une quelconque des revendications 1 à 3, caractérisé en ce que les fixations espacées sont réalisées par des assemblages soudés (cordons de soudure 11, 12) et/ou par des assemblages à vis et/ou par des assemblages collés.

5. Assemblage de poutrelles selon l'une quelconque des revendications 1 à 4, caractérisé en ce que l'élément de jonction (2) est situé au milieu du montant A,
en ce qu'au niveau de l'élément de jonction (2), se rencontrent et sont fixés, par leurs extrémités frontales, une partie inférieure, dirigée vers le bas, du pilier A (poutrelle 4), un support d'aile (5) dirigé à peu près horizontalement vers l'avant et une traverse (6) qui s'étend à peu près horizontalement et qui sert d'élément inférieur du cadre du pare-brise, et
en ce qu'une partie supérieure du pilier A, dirigée obliquement vers le haut, est la poutrelle (3) qui recouvre l'élément de jonction (2) dans une région (8) et qui est jointe, par une extrémité (9) et, en plus, à distance (au point 10), à l'élément de jonction (2), de telle sorte que la partie (13) qui couvre cette distance agit comme un tirant ou comme une jambe de force.

6. Assemblage de poutrelles selon la revendication 5, caractérisé en ce que l'élément de jonction (2) est fermé vers le haut par une tôle de fermeture (14), et en ce que cette tôle de fermeture (14) forme un logement pour un pare-brise dans la région de jonction.
